# EUROPEAN PATENT APPLICATION

(11) **EP 4 834 581 A1**
(43) Date of publication of application: **04.11.2026**
(21) Application number: 25172784.8
(22) Date of filing: 28.04.2025
(51) Int. Cl.: B32B 17/10

(54) **INTERLAYER FILMS LAMINATED SAFETY GLASS WITH IMPROVED OPTICAL APPEARANCE AND STABILITY**

(71) Applicant: Kuraray Europe GmbH, 65795 Hattersheim am Main (DE)
(72) Inventor: Haerth, Michael, Leinach (DE); Lomnitz, Stephan, Troisdorf (DE)
(74) Representative: Janßen, Christian Oliver

(57) **Abstract**

The invention relates to plasticized interlayer films based on polyvinyl acetal comprising low concentrations of certain diaminoanthraquinone dyes.

## Description

The invention relates to plasticized interlayer films based on polyvinyl acetal comprising low concentrations of certain diaminoanthraquinone dyes.

Commercially available plasticized polyvinyl butyral (PVB) films for laminated glazing often contain an organic dye for various applications. For examples, the top portion of windshields in vehicles are often tinted in order to block a portion of the sunlight. To this end, WO 2006/021531 describes the use of various colorants for these so-called shadebands, inter alia blue organic dyes with a diaminoanthraquinone structure commercially available under the tradename Macrolex^{®}.

It is also known to add low amounts of certain colorants to the polyvinyl acetal interlayers in order to mask the yellowing of the interlayer during its lifetime since greenish or blueish tints are more appreciated by the industry than a yellow tint. For this application, the colorants have to provide a pleasant color appearance to mask the yellowing as well as to be stable under prolonged UV and heat exposure as experienced in window facades and windshields.

It has now been found that the diaminoanthraquinone described above and used in rather high concentrations as colorants in these shadebands deteriorate under UV exposure over time, leading to an undesirable color shift in the shadeband.

One possible solution would be to use inorganic pigments instead of the organic dyes since pigments are known to be much more stable. However, pigments have also some disadvantages. The have a more limited colour palette, can change the mechanical properties of the film and tend to clump together or spread unevenly. Thus, a technical solution using an organic dye would be advantageous.

The current inventors have now surprisingly found that the above-mentioned diaminoanthraquinone are much more stable under the same conditions when used in very small concentrations for the use of masking the yellowness.

Thus, one objective of the present invention was to provide interlayer films with an improved optical appearance, especially an improved color and/or improved color stability, especially better color under prolonged UV irradiation, and/or improved optical appearance of interlayer films made from recycled material and/or interlayer films prepared in highly forcing extrusion conditions.

These and other objectives have been solved by the present invention.

Accordingly, a first aspect of the present invention concerns an interlayer film for laminated glass comprising at least one polyvinyl acetal, at least one plasticizer and at least one organic dye, wherein the at least one organic dye is represented by formula I: 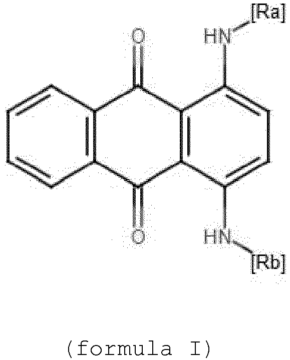 wherein Ra and Rb are independently chosen from substituted or unsubstituted aryl groups and wherein the concentration of the at least one organic dye in the interlayer film is from 0.00001 to 0.01 wt%.

Preferably, the concentration of the at least one organic dye in the interlayer film is from 0.00005 to 0.001 wt%.

The term "aryl" refers to a functional group or substituent that comes from an aromatic ring. Suitable examples of aryl groups include phenyl, naphthyl and biphenyl, preferably the aryl group is phenyl.

Preferably, the aryl group, preferably the phenyl group, substituted with at least one alkyl group. The term "alkyl" refers to a monovalent group that is a radical of an alkane and includes groups that are linear, branched, cyclic, bicyclic, or a combination thereof. The alkyl group has 1 to 20 carbon atoms. Preferably, the alkyl group contains 1 to 10 carbon atoms, more preferably 1 to 5 carbon atoms, and most preferably 1 to 3 carbon atoms. Suitable examples of alkyl groups include methyl, ethyl, propyl, isopropyl, n-butyl, sec-butyl, tert-butyl, tert-amyl, n-pentyl, n-hexyl, n-heptyl, n-octyl, n-nonyl, n-decyl, eicosanyl, cyclopropyl, cyclobutyl, cyclopentyl, cyclopentylmethyl, cyclopentylethyl, cyclopentylbutyl, cyclohexyl, cyclohexylmethyl, cyclohexylethyl, cyclohexylbutyl, methylcyclohexylmethyl, ethylcyclohexylmethyl, and ethylcyclohexylethyl.

Preferably, Ra and Rb are both alkyl-substituted phenyl groups.

Specifically, the at least one organic dye is represented by formula II:

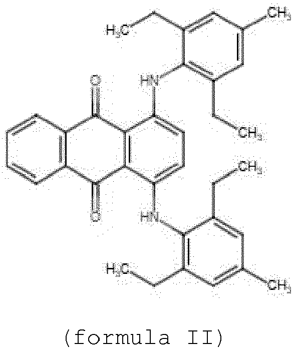

For certain applications in structural glazing, very stiff interlayer films are required. These usually contain lower amounts of plasticizer. However, reducing the amount of plasticizer also increases the melt viscosity of the polyvinyl acetal/plasticizer composition used in the melt extrusion process generally employed to prepare the interlayer films. This increase in viscosity leads to higher backpressure and shear forces, i.e. to harsher conditions in the extruder. These harsh conditions lead to partial degradation of the polyvinyl acetal and thus, to an increase in the yellowness of the product, which is inacceptable for the appearance of the glass facades.

It has been found that the current invention is especially useful for polyvinyl acetal films with low amounts of plasticizer, i.e. which have to be produced by extrusion under forcing conditions.

Thus, one embodiment of the present invention is an interlayer film with a total amount of plasticizer of equal to or below 16.0 wt%, more preferably from 12.0 to 15.5 wt%.

Currently, many efforts are being started to recycle the interlayer films from laminated glass from vehicles as well as from architectural applications. However, these efforts have had limited success so far, as the technologies used do not purify the plastic sufficiently. This lack of purity means that the resulting interlayers generally have worse optical appearance and generally a higher degree of yellowness.

Thus, one embodiment of the present invention is an interlayer film wherein at least part of the polyvinyl acetal is recycled material. The term "recycled material" refers to any non-virgin material. In other words, the term "recycled material" refers to polyvinyl butyral which previously has been made into a film and optionally, subsequently used to produce a glass laminate.

Preferably, at least part of the polyvinyl acetal is recycled material obtained from shredded extruded polyvinyl acetal films (trims); from laminated glass from faulty production (defect laminates); and/or from recycled laminated glass (end-of-life), more preferably, at least part of the polyvinyl acetal is material obtained from recycled laminated glass (end-of-life).

Accordingly, the source of the recycled material can be so-called trims. These are cut-offs obtained in the production of interlayer films as well as cut-offs during the lamination process, i.e. they are excess film material which has not yet been laminated.

Alternatively, the polyvinyl acetal material can be obtained from glass laminates either from defect laminates directly after production of from so-called end-of-life laminates, i.e. glass windows and windshields after usage. Recycling such interlayer films usually involves mechanically crushing the glass plates of the laminated glass, separating the polymer material and the glass and purifying the polymer material by physical and/or chemical means.

The polyvinyl acetal used in accordance with the present invention results in particular from the reaction of at least one polyvinyl alcohol with one or more aliphatic unbranched aldehyde containing 2 to 10 carbon atoms. To this end, n-butyraldehyde is preferably used and the preferred polyvinyl acetal is PVB.

The films preferably contain polyvinyl acetals having a proportion of polyvinyl acetate groups of 0.1 to 20 mol %, preferably 0.5 to 3 mol %, or 5 to 8 mol %.

The polyvinyl alcohol content of the polyvinyl acetal used may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content and proportion of polyvinyl acetate groups were determined in accordance with DIN ISO 3681 (acetate content) and DIN ISO 53240 (PVA content).

The inventive interlayer films comprise at least one plasticizer. Preferably, such plasticizer(s) can be selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid. By definition, plasticisers are organic liquids having a high boiling point. For this reason, further types of organic liquids having a boiling point above 120 °C can also be used as plasticiser.

In one embodiment, the interlayer film comprises at least 20 wt%, such as 22.0 to 45.0 wt%, preferably 25.0 to 32.0 wt% and in particular 25.0 to 30.0 wt% or 20.0 to 35.0 wt% total amount of plasticizers.

Additionally, the interlayer film contain further additives, such as residual quantities of water, adhesion regulators, optical brighteners or fluorescent additives, processing aids, inorganic or organic nanoparticles, pyrogenic silicic acid and/or surface active substances.

Another aspect of the present invention is the use of the interlayer film described above for the manufacture of laminated glass, especially for the manufacture of museum glazing, shop window glazing, as motor vehicle glazing, aircraft glazing, in photovoltaic modules in LED or OLED screens, televisions, computer screens, large screens), in electrochromic, photochromic, photoelectrochromic glass elements.

Yet another aspect of the present invention is a laminated glass comprising the interlayer film described above.

The lamination step for producing the laminated glass is preferably carried out such that the interlayer film is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours.

Vacuum laminators may also be used. These consist of a chamber that can be heated and evacuated, in which laminated glass can be laminated within 30 - 60 minutes. Reduced pressures from 0.01 to 300 mbar and temperatures from 100 to 200 °C, in particular 130 - 160 °C, have proven their worth in practice.

The glass film laminate may then be subjected to an autoclave process.

### Examples

### Methods

### Measurement of L*, a*, b*, ΔE*:

L*, a*, b* were measured with a HunterLab ColorQuest XE Spectrophotometer (commercially available from Hunter Associates Laboratory, Inc.) with luminant D65 and an observer angle of 10 °. The color difference ΔE* was calculated according ${ΔE}^{∗} = \sqrt{{\left({L}_{W}^{∗}-{L}_{L}^{∗}\right)}^{2} + {\left({a}_{W}^{∗}-{a}_{L}^{∗}\right)}^{2} + {\left({b}_{W}^{∗}-{b}_{L}^{∗}\right)}^{2}}$ with the subscript W being the irradiated sample and L being the sample after lamination.

### Measurement of the yellowness index YI

In order to quantify the yellowness of the interlayer film, the yellowness index YI was measured according to ASTM E313 using a ColorQuest XE spectrophotometer in a geometry of 2° and illuminant type C.

### Measurement of the haze

The haze value according to ASTM 1003 procedure B was measured on glass laminates using a ColorQuest XE spectrophotometer in a geometry of 2° and illuminant type C.

### Testing of the light stability

To test their light stability, laminates were placed in a Q-Sun Xenon radiation chamber and optical measurements were done after 0 and 5000 hours. The test condition of the radiation chamber were:
Filter: Daylight-Q (X-7460)
Radiation intensity @ 340 nm: 0.55 W/m²
Black standard temperature: 80°C
Chamber temperature: 47°C
Rel. humidity: 20%
Preparation of the interlayer films
Test laminates were produced using one layer of PVB film in a thickness of around 0.76 mm sandwiched between two conventional 2.1 mm automotive grade soda lime glasses (PlaniClear^{®}) in an autoclave containing the following steps: 30 min heating phase with pressurization up to 12 bar, 30 min hold time at 12 bar and 140 °C., and 30 min cooling down phase to 40 °C with concomitant release of pressure.

### Results

**Table 1: Compositions and test results of Reference 1 & 2 and**

| **Recipe** | **Reference 1** | **Reference 2** | **Example 1** |
|---|---|---|---|
| PVB / % | 72.5 | 72.5 | 72.5 |
| 3G8 / % | 27.5 | 27.5 | 27.5 |
| Tinuvin 234 / % | 0.17 | 0.17 | 0.17 |
| Songnox 2450 PW / % | 0.0365 | 0.0365 | 0.0365 |
| Macrolex^{®} Blau RR / % | | 0.05 | 0.00015 |

| **Results** | | | |
|---|---|---|---|
| dE* after 5000 h | 0.72 | 33.01 | 0.94 |
| Haze change after 5000 h | 0.27 | 0.21 | 0.29 |
| YI change after 5000 h | 0.61 | -36.24 | 0.71 |

### Example 1

**Table 2: Compositions and test results of Example 2**

| **Recipe** | **Example 2** |
|---|---|
| PVB / % | 85.0 |
| 3G8 / % | 15.0 |
| Tinuvin 234 / % | 0.17 |
| Songnox 2450 PW / % | 0.0365 |
| Macrolex^{®} Blau RR / % | 0.00015 |

| **Results** | |
|---|---|
| dE* after 5000 h | 0.62 |
| Haze change after 5000 h | 0.18 |
| YI change after 5000 h | 0.64 |

**Table 3: Compositions and test results of Example 3.**

| **Recipe** | **Example 3** |
|---|---|
| Monolayer Trims / % | 94.0 |
| Acoustic Trims / % | 6.0 |
| Macrolex^{®} Blau RR / % | 0.000225 |

| **Results** | |
|---|---|
| dE* after 5000 h | 1.24 |
| Haze change after 5000 h | 0.43 |
| YI change after 5000 h | 0.89 |

### Discussion of the results

Reference 1 is a PVB film without the addition of any dye.

Reference 2 is a PVB film according to the prior art with a diaminoanthraquinone dye in a higher concentration as used for shadeband applications.

Example 1 is a PVB film according to the invention with a low concentration of diaminoanthraquinone dye.

Example 2 is a PVB film according to the invention with a low concentration of diaminoanthraquinone dye as well as a low concentration of plasticizer. This kind of PVB films are generally used for structural glazing. However, due to the high viscosity of the film with little plasticizer, high temperatures and pressures are necessary during the extrusion step, leading to a slight increase in yellowness, which can be masked by using blue dyes.

Example 3 is a PVB film according to the invention with a low concentration of diaminoanthraquinone dye which was made from recycled PVB material, so-called trims.

As shown by the results, the color changed dramatically after irradiation in case of a high concentration of the diaminoanthraquinone dye (Reference 2) whereas the dE* value is very stable in case a lower concentration of diaminoanthraquinone dye is used (Examples 1 to 3), leading to a dE* which is in line with the value for the PVB film in Reference 1, which does not contain any organic dye at all.

## Claims

1. An interlayer film for laminated glass comprising at least one polyvinyl acetal, at least one plasticizer and at least one organic dye, wherein the at least one organic dye is represented by formula I: 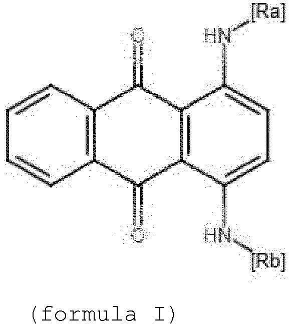 wherein Ra and Rb are independently chosen from substituted or unsubstituted aryl groups and wherein the concentration of the at least one organic dye in the interlayer film is from 0.00001 to 0.01 wt%.

2. The interlayer film according to claim 1 wherein the concentration of the at least one organic dye in the interlayer film is from 0.00005 to 0.001 wt%.

3. The interlayer film according to claim 1 or 2 wherein Ra and Rb are alkyl-substituted phenyl groups.

4. The interlayer film according to any one of claims 1 to 3 wherein the at least one organic dye is represented by formula II:

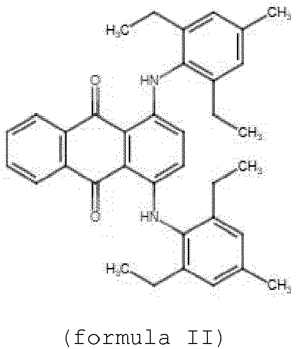

5. The interlayer film according to any one of claims 1 to 4 wherein the total amount of plasticizer is equal to or below 16.0 wt%.

6. The interlayer film according to any one of claim 1 to 5 wherein the total amount of plasticizer is from 12.0 to 15.5 wt%.

7. The interlayer film according to any one of claim 1 to 6 wherein at least part of the polyvinyl acetal is material obtained from shredded extruded polyvinyl acetal films (trims); from laminated glass from faulty production (defect laminates); and/or from recycled laminated glass (end-of-life).

8. The interlayer film according to claim 7 wherein at least part of the polyvinyl acetal is material obtained from recycled laminated glass (end-of-life).

9. The interlayer film according to any one of claim 7 to 9 wherein the total amount of plasticizer is from 20 to 35 wt%.

10. The interlayer film according to any one of claims 1 to 9 wherein the polyvinyl acetal is polyvinyl butyral.

11. Use of the interlayer film according to any one of claims 1 to 10 for the manufacture of laminated glass.

12. A laminated glass comprising the interlayer film according to any one of the claims 1 to 10.

13. The laminated glass according to claim 12 wherein the yellowness index YI increases less than 2 after an irradiation period of 5000 hours measured according to the description.

14. The laminated glass according to claim 12 or 13 wherein the color difference dE* after an irradiation period of 5000 hours measured according to the description is less than 5.

15. The laminated glass according to any one of the claims 12 to 14 wherein the haze increase after an irradiation period of 5000 hours measured according to the description is less than 1%.
